# FASCICULE DE BREVET EUROPEEN

(11) **EP 3 465 010 B1**
(45) Date de publication et mention de la délivrance du brevet: **14.07.2021**
(21) Numéro de dépôt: 17730877.2
(22) Date de dépôt: 29.05.2017
(51) Int. Cl.: F23R 3/28, F23D 11/36, F23K 5/14, F02C 7/232

(54) **INJECTEUR DE CARBURANT POUR TURBOMACHINE**
KRAFTSTOFFEINSPRITZER FÜR STRÖMUNGSMASCHINE
FUEL INJECTOR FOR TURBO-MACHINE

(30) Priorité: 31.05.2016 FR 1654942
(43) Date de publication de la demande: 10.04.2019
(73) Titulaire: Safran Aircraft Engines, 75015 Paris (FR)
(72) Inventeur: CHABAILLE, Christophe, 77550 MOISSY-CRAMAYEL (FR); BISSIERES, Antoine, 77550 MOISSY-CRAMAYEL (FR); MOTTET, Lauranne, Sophie, 77550 MOISSY-CRAMAYEL (FR)
(74) Mandataire: Brevalex
(86) Numéro de dépôt international: PCT/FR2017/051326
(87) Numéro de publication internationale: WO 2017/207901

(56) Documents cités:
- EP-A1- 1 950 429
- FR-A1- 2 921 113
- FR-A1- 3 011 619
- US-A- 5 918 628
- US-A1- 2005 029 483
- US-A1- 2006 130 901

## Description

### DOMAINE TECHNIQUE

L'invention concerne les injecteurs de fluide pour turbomachine d'aéronef, telles que les turboréacteurs et les turbopropulseurs. Elle se rapporte notamment aux injecteurs de type aéromécanique.

### ÉTAT DE LA TECHNIQUE ANTÉRIEURE

Des corps d'entrée d'injecteur de carburant pour turbomachine de structure connue comprennent une enveloppe, un embout d'entrée, logé à l'intérieur de l'enveloppe, et configuré pour servir de siège à un obturateur mobile.

L'embout d'entrée comprend un conduit central de passage de fluide, et un rebord annulaire entourant le conduit central. Le rebord annulaire comprend un logement pour un joint d'étanchéité.

Ce joint d'étanchéité a tendance à sortir au moins partiellement de son logement, ce qui peut conduire au blocage de l'obturateur en position fermé et à l'arrêt de l'alimentation en carburant de la chambre de combustion par l'injecteur.

Le document US 5 918 628 A décrit un injecteur de carburant pour turbomachine de l'art antérieur.

### EXPOSÉ DE L'INVENTION

L'invention vise à résoudre au moins partiellement les problèmes rencontrés dans les solutions de l'art antérieur.

A cet égard, l'invention a pour objet un injecteur de carburant pour turbomachine, avec les caractéristiques de la revendication 1. Des autres caractéristiques particulières sont divulguées dans les revendications dépendantes.

L'invention se rapporte aussi à une turbomachine comprenant un injecteur tel que défini ci-dessus.

Enfin, l'invention concerne un procédé de fabrication d'un injecteur tel que défini par la revendication 1. Le procédé de fabrication comprend une étape d'insertion du joint dans le logement, et de déformation du logement pour incliner les parois l'une vers l'autre en direction de l'ouverture.

Le logement est ainsi facile à réaliser, notamment par pliage à froid des parois.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation schématique partielle d'un injecteur de carburant de turbomachine, selon un premier mode de réalisation de l'invention ;
- la figure 2 est une représentation schématique fonctionnelle de l'injecteur selon le premier mode de réalisation, dans une turbomachine ;
- la figure 3 est une représentation schématique partielle en coupe longitudinale d'un corps d'entrée de l'injecteur selon le premier mode de réalisation, lorsque l'obturateur de l'injecteur est en position fermée ;
- la figure 4 est une représentation schématique partielle en coupe longitudinale d'un corps d'entrée de l'injecteur selon le premier mode de réalisation, lorsque l'obturateur de l'injecteur est en position ouverte ;
- la figure 5 est une représentation agrandie du détail A représenté à la figure 3 ;
- la figure 6 est une vue en perspective d'un embout d'entrée de l'injecteur selon le premier mode de réalisation ;
- la figure 7 est une vue partielle en élévation de l'embout d'entrée de l'injecteur selon le premier mode de réalisation.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

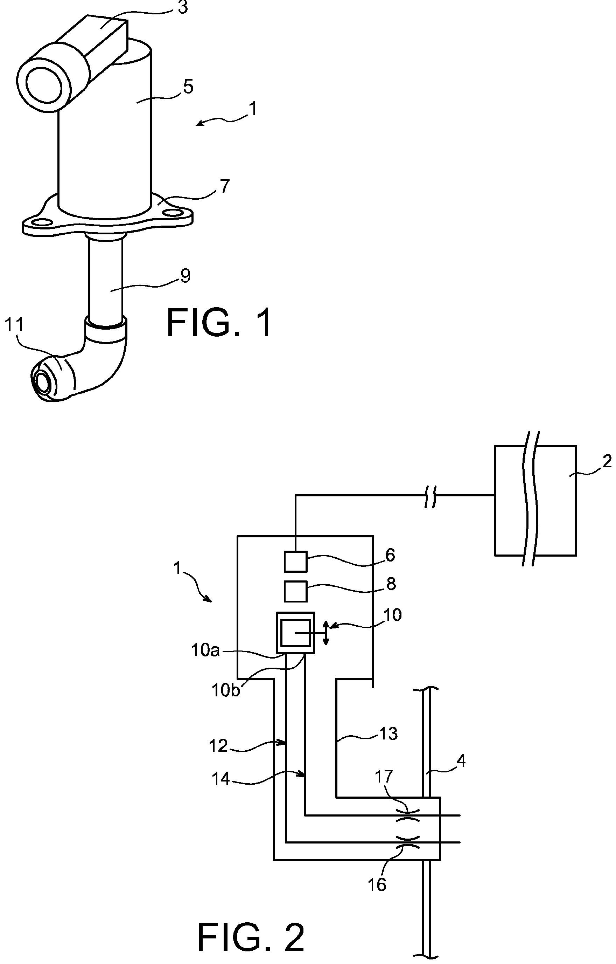

La figure 1 représente un injecteur 1 de carburant pour turbomachine d'aéronef, selon un mode de réalisation préféré de l'invention.

L'injecteur 1 est alimenté en carburant depuis un réservoir 2 de turbomachine. À son extrémité aval, l'injecteur 1 traverse un fond de chambre de combustion 4, d'une manière connue de l'homme du métier.

Dans le présent document, les termes « amont » et « aval » sont utilisés en référence à la direction d'écoulement du carburant dans l'injecteur 1 en direction de la chambre de combustion.

L'injecteur 1 comprend un corps d'entrée 3, un corps central 5 dans lequel débouche le corps d'entrée 3, une platine de fixation 7 pour fixer l'injecteur 1 à une paroi de la chambre de combustion, une canne d'injection 9, et un nez d'injecteur 11 situé à proximité de l'extrémité distale de la canne d'injection 9.

L'injecteur 1 comprend, d'amont en aval, une vanne d'étanchéité 6, un diaphragme 8, un dispositif de dosage 10. Le dispositif 10 comprend une première sortie de carburant 10a et une deuxième sortie de carburant 10b distincte de la première sortie 10a. La première sortie 10a alimente un circuit primaire de carburant 12, tandis que la seconde sortie 10b alimente un circuit secondaire de carburant 14, destiné à la circulation de plus gros débits en direction de la chambre de combustion.

Le circuit primaire 12 comporte une vrille primaire 16, de l'anglais « swirler », pour la mise en rotation du carburant en vue de sa pulvérisation. Le circuit secondaire 14 comporte une vrille secondaire 17.

La vanne d'étanchéité 6, le diaphragme 8, le dispositif de dosage 10, le circuit primaire 12 et le circuit secondaire 14 sont agencés à l'intérieur d'une enveloppe 13 délimitant l'injecteur 1.

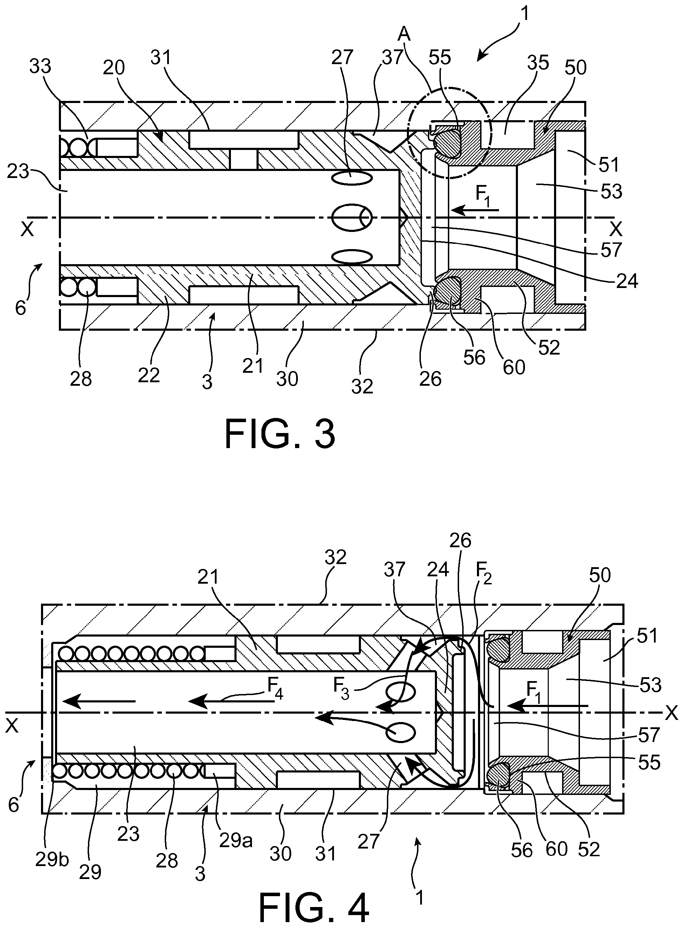

En référence conjointe aux figures 3 et 4, le corps d'entrée 3 est sensiblement annulaire autour d'un axe longitudinal X-X.

Dans la suite de l'exposé, une direction parallèle à la direction de l'axe longitudinal X-X est appelée direction axiale, une direction orthogonale à la direction axiale est appelée direction radiale.

Le corps d'entrée 3 est délimité par une enveloppe 30 qui fait partie de l'enveloppe extérieure 13 de l'injecteur 1. Le corps d'entrée 3 loge la vanne d'étanchéité 6 à l'intérieur de l'enveloppe 30. Cette vanne 6 comporte un obturateur 20, un ressort 28 et un embout d'entrée 50.

L'enveloppe 30 comprend une surface interne 31 et une surface externe 32 opposée à la surface interne 31.

La surface interne 31 est sensiblement cylindrique de section circulaire. Elle délimite radialement vers l'extérieur un espace de logement 33 de l'obturateur et un espace de logement 35 de l'embout d'entrée.

Les espaces de logement 33 et 35 ont sensiblement le même rayon, ce rayon correspond à la distance entre l'axe longitudinal X-X et la surface interne 31.

La surface externe 32 est également sensiblement cylindrique de section circulaire, en étant concentrique autour de la surface interne 31.

L'obturateur 20 comprend un corps 21, un conduit interne 23 à l'intérieur du corps 21, et des conduits d'admission 27 qui débouchent dans le conduit interne 23.

L'obturateur 20 est mobile à l'intérieur de l'enveloppe 30. Il est configuré pour être ouvert lorsque la pression du carburant est supérieure à un premier seuil. Il est configuré pour être fermé si la pression du carburant est inférieure à ce premier seuil.

L'obturateur 20 forme une soupape pour l'admission de carburant dans le corps central 5 de l'injecteur 1. Il est également connu sous le nom de « clapet d'entrée ». En particulier, l'obturateur 20 est de type « tout ou rien » : il comporte seulement une seule position stable en position ouverte et une seule position stable en position fermée.

Le corps 21 de l'obturateur 20 comprend une paroi annulaire 22, une paroi de fond 24, et un rebord de contact 26.

La paroi de fond 24 ferme l'obturateur 20 vers l'amont. Cette paroi de fond 24 est entourée par le rebord de contact 26 annulaire.

Le rebord de contact 26 est destiné à venir en contact d'un joint d'étanchéité 56 de l'embout d'entrée 50, en position fermée de l'obturateur 20.

La paroi annulaire 22 est sensiblement cylindrique de section circulaire. Elle délimite avec la surface interne 31 une cavité annulaire de logement 29 du ressort 28. Cette cavité 29 est délimitée selon la direction axiale par une première butée 29a formée par la paroi annulaire 22 et par une deuxième butée 29b formée par l'enveloppe 30.

Le ressort 28 est un ressort de compression qui est configuré pour solliciter l'obturateur 20 en direction de sa position fermée. Le ressort 28 est par exemple un ressort hélicoïdal.

Le conduit interne 23 est réalisé à l'intérieur du corps 21. Il est situé dans la partie centrale du corps 21. Il sert à faire passer du carburant à travers l'obturateur 20, en direction du nez d'injecteur 11.

Chaque conduit d'admission 27 prend la forme d'un canal qui s'étend entre un volume intermédiaire 37 et le conduit interne 23.

Les conduits d'admission 27 sont répartis angulairement à travers le corps 21 de l'obturateur 20. Les conduits d'admission 27 sont chacun inclinés vers l'aval par rapport à la direction longitudinale pour faciliter l'écoulement de carburant en direction de la chambre de combustion.

Le volume intermédiaire 37 est délimité radialement vers l'extérieur par la surface interne 31 de l'enveloppe.

Il est délimité radialement vers l'intérieur par l'obturateur 20 en position fermé de l'obturateur 20. Il est délimité seulement partiellement radialement vers l'extérieur en position ouverte de l'obturateur 20.

Le volume intermédiaire 37 sert à relier fluidiquement l'embout d'entrée 50 à l'obturateur 20, en position ouverte de l'obturateur 20. Il est dépourvu de communication fluidique avec l'embout d'entrée 50 en position fermée de l'obturateur 20.

L'embout d'entrée 50 comprend un corps annulaire 52 qui est traversé à ses deux extrémités opposées selon la direction axiale par une entrée 51 et une sortie 57. L'embout d'entrée 50 comporte un conduit central 53 qui s'étend depuis son entrée 51 jusqu'à sa sortie 57, le long de la direction longitudinale.

L'entrée 51 de l'embout d'entrée 50 débouche sur l'extérieur de l'injecteur 1. La sortie 57 de l'embout d'entrée 50 débouche dans le volume intermédiaire 37.

Le corps 52 comprend un rebord annulaire 60 à proximité de la sortie 57, le long de la direction longitudinale. Le rebord annulaire 60 délimite un logement 55, en forme de gorge, pour loger un joint d'étanchéité 56. Ce joint 56 est par exemple un joint torique.

Le joint 56 est destiné à venir en contact du rebord de contact 26 de l'obturateur 20 en position fermée de l'obturateur 20, pour empêcher l'écoulement de carburant entre la sortie 57 et le conduit interne 23. L'embout d'entrée 50 joue de ce fait le rôle de siège de l'obturateur 20, en position fermée de l'obturateur 20, représentée à la figure 3.

Le joint d'étanchéité 56 est dépourvu de contact avec le rebord de contact 26, lorsque l'obturateur 20 est en position ouverte, représentée à la figure 4. Dans ce cas, le joint d'étanchéité 56 est à distance du rebord de contact 26, pour que du carburant puisse s'écouler depuis la sortie 57 de l'embout d'entrée 50, dans le volume intermédiaire 37, avant de rejoindre le conduit interne 23 de l'obturateur 20.

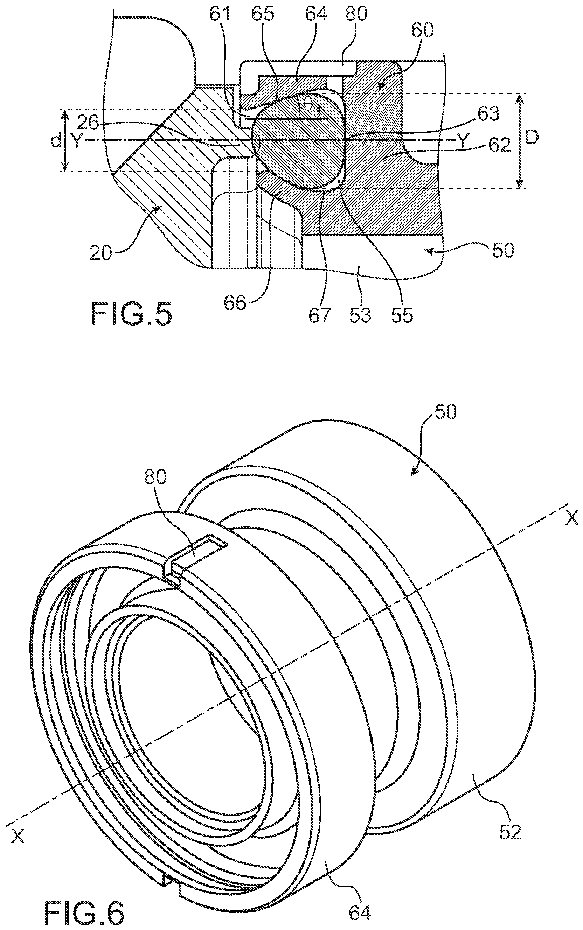

En référence aux figures 5 à 7, le rebord annulaire 60 de l'embout d'entrée 50 comprend un bord amont 62 en saillie radialement vers l'extérieur du corps 52, un bord externe 64 et un bord interne 66 opposé au bord externe 64.

Le bord amont 62 relie mécaniquement entre eux le bord interne 66 et le bord externe 64 en amont du logement 55. Le bord interne 66 et le bord externe 64 s'étendent tous les deux vers l'aval depuis le bord amont 62. Le bord externe 64 est situé radialement vers l'extérieur par rapport au bord interne 66. Le bord interne 66 et le bord externe 64 délimitent conjointement vers l'aval une ouverture 61 du logement.

Le logement 55 est délimité par une paroi de fond 63 du bord amont 62, une paroi longitudinale externe 65 du bord externe 64, et une paroi longitudinale interne 67 du bord interne 66. La paroi de fond 63 est opposée à l'ouverture 61 selon la direction longitudinale. Les deux parois 65, 67 opposées s'étendent chacune entre la paroi de fond 63 et l'ouverture 61.

Le logement 55 s'étend sensiblement sur toute la longueur circonférentielle du rebord annulaire 60, c'est-à-dire sensiblement sur toute la longueur circonférentielle de l'embout d'entrée 50.

Le logement 55 est de forme sensiblement trapézoïdale en section longitudinale du corps d'entrée 3, l'ouverture 61 étant localement sensiblement parallèle à la paroi de fond 63 du logement 55.

L'ouverture 61 s'ouvre vers l'aval selon une direction Y-Y sensiblement parallèle à une direction de l'axe longitudinal X-X.

La paroi externe 65 est inclinée d'un angle θ₁ compris entre 15° et 25° par rapport à la direction longitudinale X-X.

La paroi interne 67 est inclinée par rapport à la direction longitudinale X-X en étant espacée d'une distance d qui est égale à au plus 70% du diamètre maximal D du joint 56 selon une direction radiale, pour fermer le logement 55.

Les parois 65 et 67 sont inclinées l'une vers l'autre vers l'aval, en direction de l'ouverture 61 du logement 55. L'ouverture 61 est alors davantage obturée par ces parois 65, 67, ce qui permet de mieux retenir le joint 56 dans le logement 55.

Le rebord annulaire 60 comprend également un conduit d'évacuation 80 qui débouche dans le logement 55 à travers la paroi externe 65. Le conduit d'évacuation 80 débouche également sur l'extérieur de l'embout d'entrée 50.

Le conduit d'évacuation 80 permet d'évacuer hors du logement 55 du carburant qui y aurait pénétré et qui serait derrière le joint 56. Du fait de ce conduit, le carburant dans le logement 55 risque encore moins de pousser le joint 56 hors du logement 55.

En référence à la figure 6, l'embout d'entrée 50 comprend seulement deux conduits d'évacuation 80 qui sont diamétralement opposés l'un de l'autre par rapport à l'axe longitudinal X-X du corps d'entrée 3.

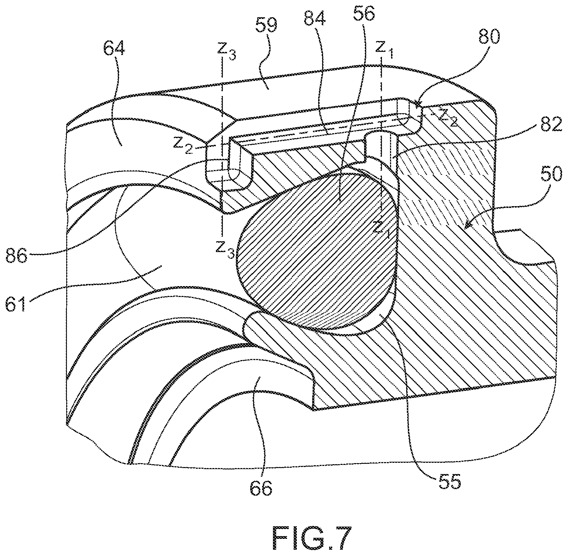

En référence plus spécifiquement à la figure 7, chaque conduit d'évacuation 80 comprend un premier canal 82, un deuxième canal 84 et un troisième canal 86.

Le premier canal 82 s'étend sensiblement selon une direction radiale Z₁-Z₁ depuis la paroi externe 65 jusqu'au deuxième canal 84. Le deuxième canal 84 s'étend selon une direction Z₂-Z₂ qui est sensiblement parallèle à la direction longitudinale X-X depuis l'amont du premier canal 82 jusqu'au troisième canal 86. Le troisième canal 86 s'étend selon une direction Z₃-Z₃ qui est sensiblement radiale et sensiblement parallèle à l'orientation du premier canal 82.

Le deuxième canal 84 prend la forme d'une rainure ménagée sur une surface externe 59 de l'embout d'entrée 50.

La fabrication de l'embout d'entrée 3 est expliquée ci-après.

L'embout d'entrée 50 est d'abord réalisé de manière à ce que la paroi externe 65 soit inclinée de l'angle θ₁ et la paroi interne 67 soit sensiblement parallèle à la direction longitudinale X-X. ces deux parois 65, 67 définissent alors entre elles une ouverture 61 plus grande que celle de l'embout d'entrée 50 qui est représenté à la figure 3.

Le joint 56 est ensuite inséré dans son logement 55. Le bord interne 66 est alors déformé plastiquement pour que la paroi externe 65 et la paroi interne 67 se rapprochent l'une de l'autre vers l'aval. L'ouverture 61 est alors partiellement obturée, du fait du rapprochement des parois 65, 67 entre elles, ce qui permet de retenir le joint 56 dans son logement 55. Le joint 56 est alors serti dans son logement 55.

Le premier canal 81 et le troisième canal 86 sont de préférence obtenus par perçage de l'embout d'entrée 50 depuis l'extérieur de l'embout d'entrée 50. Le deuxième canal 84 est formé par un rainurage de la surface externe 59 de l'embout d'entrée 50. Le conduit d'évacuation 80 est alors aisé et relativement peu coûteux à réaliser.

Le déplacement de l'obturateur 20 entre sa position fermée représentée à la figure 3 à sa position ouverte représentée à la figure 4 est expliqué ci-dessous.

A la figure 3, l'obturateur 20 est en position fermée. La pression du carburant sur la paroi de fond 24 de l'obturateur est inférieure au seuil d'ouverture de l'obturateur 20, dit premier seuil.

Le rebord de contact 26 de l'obturateur 20 est en contact mécanique du joint d'étanchéité 56. Le volume intermédiaire 37 est intégralement fermé radialement vers l'intérieur par la paroi annulaire 22 de l'obturateur 20. L'obturateur 20 empêche le carburant arrivant selon le flux F₁ dans l'injecteur 1 de s'écouler jusqu'au volume intermédiaire 37.

A la figure 4, l'obturateur 20 est en position ouverte. La pression du carburant sur la paroi de fond 24 de l'obturateur est devenue supérieure au premier seuil.

Le rebord de contact 26 s'est éloigné de l'embout d'entrée 50, pour être dépourvu de contact mécanique direct avec le joint d'étanchéité 56. Le volume intermédiaire 37 devient seulement partiellement obturé radialement vers l'intérieur par la paroi annulaire 22.

Le carburant qui arrive selon le flux F₁ dans l'injecteur 1 traverse le conduit central 53, il s'écoule à travers la sortie 57 de l'embout d'entrée 50 jusque dans le volume intermédiaire 37 selon le flux F₂.

Le carburant dans le volume intermédiaire 37 continue de s'écouler vers l'aval à travers les conduits d'admission 27 jusque dans le conduit interne 23 selon le flux F₃. Le carburant dans le conduit interne 23 s'écoule enfin vers l'aval selon le flux F₄ en direction du dispositif de dosage 10 de l'injecteur 1.

Bien entendu, diverses modifications peuvent être apportées par l'homme du métier à l'invention qui vient d'être décrite sans sortir du cadre de l'exposé de l'invention.

En particulier, le logement 55 peut avoir une forme autre que trapézoïdale en section longitudinale du corps d'entrée 3.

Le rebord annulaire 60 et le joint d'étanchéité 56 peuvent s'étendre sur une partie seulement de la longueur circonférentielle du corps 52 de l'embout d'entrée 50.

De manière similaire, un des conduits d'évacuation 80 pourrait s'étendre sur une plus grande longueur circonférentielle du corps d'entrée 3. Le nombre et la répartition angulaire des conduits d'évacuation autour de l'axe longitudinal X-X peut varier.

La forme, le nombre et l'inclinaison des canaux d'évacuation 82, 84, 86 de chaque conduit d'évacuation 80 est également susceptible de varier.

Par exemple, au moins un des conduits d'évacuation 80 peut ne comprendre qu'un seul canal 82 incliné vers l'aval par rapport à la direction longitudinale et débouchant dans le logement 55 à travers la paroi externe 65.

## Revendications

1. Injecteur (1) de carburant pour turbomachine, l'injecteur (1) comprenant d'amont en aval une vanne d'étanchéité (6), un diaphragme (8) et un dispositif de dosage (10),
l'injecteur (1) de carburant comprenant d'amont en aval un corps d'entrée (3), un corps central (5) dans lequel débouche le corps d'entrée (3), une platine de fixation (7) pour fixer l'injecteur (1) à une paroi de chambre de combustion, une canne d'injection (9) et un nez d'injecteur (11), l'injecteur (1) étant délimité vers l'extérieur de l'injecteur (1) par une enveloppe (13, 30),
le corps d'entrée (3) logeant la vanne d'étanchéité (6) à l'intérieur de l'enveloppe (30), la vanne (6) comprenant un obturateur (20), un ressort (28) et un embout d'entrée (50), le ressort (28) sollicitant l'obturateur (20) en position fermée, l'embout d'entrée (50) étant configuré pour servir de siège à l'obturateur (20),
l'obturateur (20) comprenant un corps (21), un conduit interne (23) à l'intérieur du corps (21) et des conduits d'admission (27) qui débouchent dans le conduit interne (23) à travers le corps (21),
le corps (21) de l'obturateur comprenant une paroi annulaire (22), une paroi de fond (24) et un rebord de contact annulaire (26), la paroi de fond (24) fermant l'obturateur (20) vers l'amont et le rebord de contact (26) étant destiné à venir au contact d'un joint d'étanchéité (56) en position fermée de l'obturateur (20),
chaque conduit d'admission (27) étant un canal s'étendant entre un volume intermédiaire (37) et le conduit interne (23), les conduits d'admission (27) étant répartis angulairement à travers le corps (21) de l'obturateur (20) et étant inclinés vers l'aval par rapport à la direction longitudinale du corps d'entrée (3),
le volume intermédiaire (37) étant délimité radialement vers l'extérieur par une surface interne (31) de l'enveloppe (30) et étant délimité radialement vers l'intérieur par l'obturateur (20) en position fermée de l'obturateur (20),
le volume intermédiaire (37) reliant l'embout d'entrée (50) à l'obturateur (20) en position ouverte de l'obturateur (20) et étant dépourvu de communication fluidique avec l'embout d'entrée (50) en position fermée de l'obturateur (20),
l'embout d'entrée (50) comprenant un corps annulaire (52) qui est traversé à ses deux extrémités opposées selon la direction longitudinale du corps d'entrée (3) par une entrée (51) et une sortie (57), l'embout d'entrée (50) étant traversé par un conduit central (53) qui s'étend depuis son entrée (51) jusqu'à sa sortie (57), l'entrée (51) débouchant sur l'extérieur de l'injecteur (1),
le corps annulaire (52) comprenant un rebord annulaire (60) entourant le conduit central (53) et comprenant un logement (55) pour un joint d'étanchéité (56),
le logement (55) étant délimité par une paroi de fond (63), une ouverture (61) opposée à la paroi de fond (63), et deux parois (65, 67) opposées qui s'étendent chacune entre la paroi de fond (63) et l'ouverture (61),
le joint d'étanchéité (56) étant au contact de l'obturateur (20) en position fermée de l'obturateur (20) en empêchant l'écoulement de carburant entre la sortie de l'embout d'entrée (50) et le conduit interne (23),
**caractérisé en ce que** le joint (56) est serti dans le logement (55) par les parois (65, 67) qui sont inclinées l'une vers l'autre en direction de l'ouverture (61), les parois (65, 67) sont espacées d'une distance (d) qui est égale au plus à 70% du diamètre maximal (D) du joint (56) selon une direction radiale en section longitudinale du corps d'entrée (3), pour fermer le logement (55),
le rebord annulaire (60) comprenant un conduit d'évacuation (80) débouchant dans le logement (55) et sur l'extérieur de l'embout d'entrée (50), le conduit d'évacuation étant configuré pour évacuer du fluide hors du logement (55),
au moins une partie du conduit d'évacuation (80) s'étendant selon une direction (Z₂-Z₂) qui est sensiblement parallèle à la direction longitudinale (X-X) du corps d'injecteur (3), et étant formée par une rainure ménagée sur une surface radialement externe (59) de l'embout d'entrée (50) en regard de la surface interne (31) de l'enveloppe (30).

2. Injecteur (1) de carburant selon la revendication précédente, dans lequel l'ouverture (61) débouche sur l'aval du corps d'entrée (3), l'ouverture (61) étant de préférence dirigée selon une direction (Y-Y) sensiblement parallèle à une direction longitudinale (X-X) du corps d'entrée (3).

3. Injecteur (1) de carburant selon l'une quelconque des revendications précédentes, dans lequel la paroi externe (65) est inclinée d'un angle (θ₁) compris entre 15° et 25° par rapport à la direction longitudinale (X-X).

4. Injecteur (1) de carburant selon l'une quelconque des revendications précédentes, dans lequel le logement (55) est de forme sensiblement trapézoïdale en section longitudinale du corps d'entrée (3), l'ouverture (61) étant localement sensiblement parallèle à la paroi de fond (63) du logement (55).

5. Injecteur (1) de carburant selon l'une quelconque des revendications précédentes, dans lequel le conduit d'évacuation (80) traverse un bord externe (64) du rebord annulaire (60).

6. Turbomachine comprenant un injecteur (1) selon l'une quelconque des revendications précédentes.

7. Procédé de fabrication d'un injecteur (1) selon l'une quelconque des revendications 1 à 5, comprenant:
une étape d'insertion du joint (56) dans le logement (55), et de déformation du logement (55) pour incliner les parois (65, 67) l'une vers l'autre en direction de l'ouverture (61).

## Patentansprüche

1. Kraftstoffeinspritzer (1) für Strömungsmaschine, wobei der Einspritzer (1) von stromaufwärts nach stromabwärts ein Dichtigkeitsventil (6), eine Membran (8) und eine Dosiervorrichtung (10) aufweist,
wobei der Kraftstoff einspritzer (1) von stromaufwärts nach stromabwärts einen Eintrittskörper (3), einen mittigen Körper (5), in welchen der Eintrittskörper (3) mündet, eine Befestigungsplatte (7) zum Befestigen des Einspritzers (1) an einer Brennkammerwand, ein Einspritzrohr (9) sowie eine Einspritznase (11) aufweist, wobei der Einspritzer (1) zur Außenseite des Einspritzers (1) hin durch eine Ummantelung (13, 30) begrenzt ist,
wobei der Eintrittskörper (3) das Dichtigkeitsventil (6) im Inneren der Ummantelung (30) lagert, wobei das Ventil (6) einen Verschluss (20), eine Feder (28) sowie einen Eintrittsstutzen (50) aufweist, wobei die Feder (28) den Verschluss (20) in eine geschlossene Position vorspannt, wobei der Eintrittsstutzen (50) als Sitz für den Verschluss (20) ausgeführt ist,
wobei der Verschluss (20) einen Körper (21), eine innere Leitung (23) im Inneren des Körpers (21) sowie Einlassleitungen (27) aufweist, welche durch den Körper (21) hindurch in die innere Leitung (23) münden,
wobei der Körper (21) des Verschlusses eine ringförmige Wand (22), eine Bodenwand (24) sowie einen ringförmigen Anlageflansch (26) aufweist, wobei die Bodenwand (24) den Verschluss (20) stromaufwärts verschließt und der Anlageflansch (26) in der geschlossenen Stellung des Verschlusses (20) mit einer Dichtung (56) in Anlage kommen soll,
wobei jede Einlassleitung (27) ein Kanal ist, der sich zwischen einem Zwischenvolumen (37) und der inneren Leitung (23) erstreckt, wobei die Einlassleitungen (27) winkelförmig durch den Körper (21) des Verschlusses (20) verteilt sind und bezüglich der Längsrichtung des Eintrittskörpers (3) stromabwärts geneigt sind,
wobei das Zwischenvolumen (37) radial nach außen durch eine Innenfläche (31) der Ummantelung (30) begrenzt ist sowie in der geschlossenen Stellung des Verschlusses (20) radial nach innen durch den Verschluss (20) begrenzt ist,
wobei das Zwischenvolumen (37) in der offenen Stellung des Verschlusses (20) den Eintrittsstutzen (50) mit dem Verschluss (20) verbindet und in der geschlossenen Stellung des Verschlusses (20) keine Fluidverbindung mit dem Eintrittsstutzen (50) vorliegt,
wobei der Eintrittsstutzen (50) einen ringförmigen Körper (52) aufweist, der an seinen beiden entgegengesetzten Enden in der Längsrichtung des Eintrittskörpers (3) von einem Einlass (51) und einem Auslass (57) durchsetzt ist, wobei der Eintrittsstutzen (50) von einer mittigen Leitung (53) durchsetzt ist, welche sich von seinem Einlass (51) bis zu seinem Auslass (57) erstreckt, wobei der Einlass (51) in der Außenseite des Einspritzers (1) mündet,
wobei der ringförmige Körper (52) einen ringförmigen Flansch (60) aufweist, der die mittige Leitung (53) umgibt und einen Sitz (55) für eine Dichtung (56) aufweist,
wobei der Sitz (55) durch eine Bodenwand (63), eine der Bodenwand (63) gegenüberliegende Öffnung (61) sowie zwei gegenüberliegende Wände (65, 67) begrenzt wird, welche sich jeweils zwischen der Bodenwand (63) und der Öffnung (61) erstrecken,
wobei die Dichtung (56) in der geschlossenen Stellung des Verschlusses (20) mit dem Verschluss (20) in Kontakt steht, indem sie den Kraftstoffdurchfluss zwischen dem Auslass des Eintrittsstutzens (50) und der inneren Leitung (23) verhindert,
**dadurch gekennzeichnet, dass** die Dichtung (56) durch die Wände (65, 67), die in Richtung der Öffnung (61) zueinander geneigt sind, in den Sitz (55) eingepresst wird, die Wände (65, 67) in einem Abstand (d) voneinander beabstandet sind, der gleich oder mehr als 70% des maximalen Durchmessers (D) der Dichtung (56) in einer radialen Richtung im Längsschnitt des Eintrittskörpers (3) beträgt, um den Sitz (55) zu verschließen,
wobei der ringförmige Flansch (60) eine Auslassleitung (80) aufweist, die in dem Sitz (55) und in die Außenseite des Eintrittsstutzens (50) mündet, wobei die Auslassleitung zum Abführen der Flüssigkeit außerhalb des Sitzes (55) ausgeführt ist,
mindestens ein Teil der Auslassleitung (80) in einer Richtung (Z₂-Z₂) verläuft, die im Wesentlichen parallel zur Längsrichtung (X-X) des Eintrittskörpers (3) verläuft, und durch eine Nut gebildet ist, welche auf einer radial äußeren Fläche (59) des Eintrittsstutzens (50) bezüglich der Innenfläche (31) der Ummantelung (30) vorgesehen ist.

2. Kraftstoffeinspritzer (1) nach dem vorhergehenden Anspruch, wobei die Öffnung (61) in die stromabwärtige Seite des Eintrittskörpers (3) mündet, wobei die Öffnung (61) vorzugsweise in eine Richtung (Y-Y) im Wesentlichen parallel zu einer Längsrichtung (X-X) des Eintrittskörpers (3) geleitet wird.

3. Kraftstoffeinspritzer (1) nach einem der vorhergehenden Ansprüche, wobei die Außenwand (65) in einem Winkel (θ₁) zwischen 15° und 25° bezüglich der Längsrichtung (X-X) geneigt ist.

4. Kraftstoffeinspritzer (1) nach einem der vorhergehenden Ansprüche, wobei der Sitz (55) im Längsschnitt des Eintrittskörpers (3) im Wesentlichen trapezförmig ist, wobei die Öffnung (61) lokal im Wesentlichen parallel zur Bodenwand (63) des Sitzes (55) verläuft.

5. Kraftstoffeinspritzer (1) nach einem der vorhergehenden Ansprüche, wobei die Auslassleitung (80) einen äußeren Rand (64) des ringförmigen Flansches (60) durchquert.

6. Strömungsmaschine mit einem Einspritzer (1) nach einem der vorhergehenden Ansprüche.

7. Verfahren zur Herstellung eines Einspritzers (1) nach einem der Ansprüche 1 bis 5, mit:
einem Schritt des Einsetzens der Dichtung (56) in den Sitz (55), und der Verformung des Sitzes (55), um die Wände (65, 67) zueinander in Richtung der Öffnung (61) zu neigen.

## Claims

1. A fuel injector (1) for a turbomachine, the injector (1) comprising from upstream to downstream a sealing valve (6), a diaphragm (8) and a metering device (10),
the fuel injector (1) comprising from upstream to downstream an inlet body (3), a central body (5) into which the inlet body (3) opens, a fixing plate (7) for fixing the injector (1) to a combustion chamber wall, an injection unit (9) and an injector nose (11), the injector (1) being delimited to the exterior of the injector (1) by a casing (13, 30),
the inlet body (3) accommodating the sealing valve (6) inside the casing (30), the valve (6) comprising a stopper (20), a spring (28) and an inlet nozzle (50), the spring (28) biasing the stopper (20) in a closed position, the inlet nozzle (50) being configured to act as a seat for the stopper (20),
the stopper (20) comprising a body (21), an inner pipe (23) inside the body (21) and admission pipes (27) which open into the inner pipe (23) through the body (21),
the body (21) of the stopper comprising an annular wall (22), a base wall (24) and an annular contact edge (26), the base wall (24) closing the stopper (20) upstream and the contact edge (26) being designed to come into contact with a gasket (56) in a closed position of the stopper (20),
each admission pipe (27) being a channel extending between an intermediate space (37) and the inner pipe (23), the admission pipes (27) being angularly distributed through the body (21) of the stopper (20) and being inclined downstream relative to the longitudinal direction of the inlet body (3),
the intermediate space (37) being radially delimited to the exterior by an internal surface (31) of the casing (30) and being radially delimited to the inside by the stopper (20) in a closed position of the stopper (20),
the intermediate space (37) connecting the inlet nozzle (50) to the stopper (20) in an open position of the stopper (20) and being devoid of any fluid communication with the inlet nozzle (50) in a closed position of the stopper (20),
the inlet nozzle (50) comprising an annular body (52) which is traversed at its two opposite ends along the longitudinal direction of the inlet body (3) by an inlet (51) and an outlet (57), the inlet nozzle (50) being traversed by a central pipe (53) which extends from its inlet (51) to its outlet (57), the inlet (51) opening to the exterior of the injector (1),
the annular body (52) comprising an annular rim (60) surrounding the central pipe (53) and comprising a housing (55) for a gasket (56), the housing (55) being delimited by a base wall (63), an opening (61) opposite to the base wall (63), and two opposite walls (65, 67) which each extend between the base wall (63) and the opening (61),
the gasket (56) being in contact with the stopper (20) in a closed position of the stopper (20) by preventing the fuel from flowing between the outlet of the inlet nozzle (50) and the inner pipe (23),
**characterised in that** the gasket (56) is crimped into the housing (55) by the walls (65, 67) which are inclined towards one another in the direction of the opening (61), the walls (65, 67) are spaced apart by a distance (d) which is equal to at most 70% of the maximum diameter (D) of the gasket (56) along a radial direction in the longitudinal cross-section of the inlet body (3), to close the housing (55),
the annular rim (60) comprising an evacuation pipe (80) opening into the housing (55) and to the exterior of the inlet nozzle (50), the evacuation pipe being configured to evacuate fluid out of the housing (55),
at least one part of the evacuation pipe (80) extending along a direction (Z₂-Z₂) which is substantially parallel to the longitudinal direction (X-X) of the injector body (3), and being formed by a groove provided on a radially external surface (59) of the inlet nozzle (50) facing the internal surface (31) of the casing (30).

2. The fuel injector (1) according to the preceding claim, wherein the opening (61) leads downstream to the inlet body (3), the opening (61) being preferably directed along a direction (Y-Y) substantially parallel to a longitudinal direction (X-X) of the inlet body (3).

3. The fuel injector (1) according to any of the preceding claims, wherein the external wall (65) is inclined at an angle (θ₁) between 15° and 25° relative to the longitudinal direction (X-X).

4. The fuel injector (1) according to any of the preceding claims, wherein the housing (55) has a substantially trapezoidal form in longitudinal cross-section of the inlet body (3), the opening (61) being locally substantially parallel to the base wall (63) of the housing (55).

5. The fuel injector (1) according to any of the preceding claims, wherein the evacuation pipe (80) traverses an external edge (64) of the annular rim (60).

6. A turbomachine comprising an injector (1) according to any of the preceding claims.

7. A method for the production of an injector (1) according to any of claims 1 to 5, comprising:
a step of inserting the gasket (56) into the housing (55), and deforming the housing (55) so as to incline the walls (65, 67) relative to one another in the direction of the opening (61).
